# EUROPEAN PATENT APPLICATION

(11) **EP 4 109 996 A1**
(43) Date of publication of application: **28.12.2022**
(21) Application number: 20919491.9
(22) Date of filing: 21.02.2020
(51) Int. Cl.: H04W 72/12

(54) **UPLINK TRANSMISSION PROCESSING METHOD AND APPARATUS, AND COMMUNICATION DEVICE, AND STORAGE MEDIUM**

(71) Applicant: Beijing Xiaomi Mobile Software Co., Ltd., Beijing 100085 (CN)
(72) Inventor: LI, Yuanyuan, Beijing 100085 (CN)
(74) Representative: dompatent von Kreisler Selting Werner - Partnerschaft von Patent- und Rechtsanwälten mbB
(86) International application number: PCT/CN2020/076283
(87) International publication number: WO 2021/164034

(57) **Abstract**

Embodiments of the present invention provide an uplink transmission processing method and apparatus, and a communication device, and a storage medium. The method comprises: in response to that uplink transmission of a first priority overlaps uplink transmission of a second priority in a time domain, determining a target moment, wherein the first priority is higher than the second priority; and cancelling the uplink transmission of the second priority after the target moment, wherein the target moment is determined at least partially according to an available time domain position of the uplink transmission of the first priority. The method can achieve that the uplink transmission of a relatively high priority does not overlap the uplink transmission of a relatively low priority in the time domain, thereby improving the transmission quality of the uplink transmission of the relatively high priority.

## Description

### TECHNICAL FIELD

Embodiments of the present disclosure relate to the field of communication technologies, and in particular, relate to a method and an apparatus for processing uplink transmission, a communication device, and a storage medium.

### BACKGROUND

In the 5G system, there is a type of services that require high reliability and low latency, such as ultra-reliable and low latency communications (URLLC) services. This type of services has a relatively high priority. Relatively speaking, there is another type of services that do not require such high reliability and low latency, such as enhanced Mobile BroadBand (eMBB) services. The priority of this type of services is lower than that of URLLC.

For a terminal, if uplink transmission with a higher priority and uplink transmission with a lower priority overlap in the time domain, all or part of the uplink transmission with the low priority needs to be canceled, to ensure the uplink transmission with the high priority. However, in the related art, the terminal cannot transmit the uplink transmission with the higher priority in a higher signal quality.

### SUMMARY

Embodiments of the present disclosure provide a method and an apparatus for processing uplink transmission, a communication device and a storage medium.

According to a first aspect of embodiments of the present disclosure, a method for processing uplink transmission is provided, which is applied to a communication device. The method includes:
determining a target time point in response to an uplink transmission of a first priority and an uplink transmission of a second priority overlapping in a time domain, wherein the first priority is higher than the second priority;
canceling the uplink transmission of the second priority after the target time point, wherein the target time point is determined at least in part according to an available time domain position of the uplink transmission of the first priority.

In the above solution, the target time point is determined by comparing an end time point of the L1^{th} symbol after an end position of time domain resource of a physical downlink control channel where physical downlink control information for scheduling the uplink transmission of the first priority is located and a start time point of L2 symbols before a start position of time domain resource of the uplink transmission of the first priority;
or,
the target time point is determined according to a start time point of L2 symbols before a start position of resource of the uplink transmission of the first priority;
wherein, L1 is 0 or a positive integer; L2 is 0 or a positive integer.

In the above solution, the target time point is determined by comparing an end time point of the L1^{th} symbol after an end position of time domain resource of a physical downlink control channel where physical downlink control information for scheduling the uplink transmission of the first priority is located and an end time point of the L3^{th} symbol after an end position of time domain resource of a physical downlink shared channel of the first priority scheduled by the physical downlink control information;
or,
the target time point is determined according to an end time point of the L3^{th} symbol after an end position of time domain resource of a physical downlink shared channel of the first priority scheduled by physical downlink control information;
wherein, L1 is 0 or a positive integer; L3 is 0 or a positive integer.

In the above solution, the target time point is determined by comparing an end time point of the L1^{th} symbol after an end position of time domain resource of a physical downlink control channel where physical downlink control information for scheduling the uplink transmission of the first priority is located and an end time point of the L4^{th} symbol after an end position of time domain resource of a physical downlink control channel where the physical downlink control information is located;
or,
the target time point is determined according to an end time point of the L4^{th} symbol after an end position of time domain resource of a physical downlink control channel where physical downlink control information for scheduling the uplink transmission of the first priority is located;
wherein, L1 is 0 or a positive integer; L4 is 0 or a positive integer.

In the above solution, the target time point is determined according to an earlier one in the comparing.

In the above solution, L1 is a sum of T_{proc,2} and d1;
T_{proc,2} is the shortest interval between an end time point of resource position of the physical downlink control channel and a start time point of resource position of a physical uplink shared channel allowed in a communication protocol;
d1 is a positive integer less than or equal to N, or d1 is 0; wherein, N is a number of symbols included in one slot.

In the above solution, L2 is a positive integer less than or equal to N, or L2 is 0; wherein, N is a number of symbols included in one slot.

In the above solution, the communication device is a terminal; the method further includes:
obtaining L2 sent by a base station, wherein L2 is determined by the base station based on a terminal capability reported by the terminal;
   or,
L2 is specified by a communication protocol.

In the above solution, L3 is a sum of T_{proc,1} and d2;
T_{proc,1} is the shortest interval between an end time point of resource position of the physical downlink shared channel and a start time point of resource position of a hybrid automatic repeat request acknowledgement allowed in a communication protocol;
d2 is a positive integer less than or equal to N, or d2 is 0; wherein, N is a number of symbols included in one slot.

In the above solution, the uplink transmission of the first priority includes uplink transmission of hybrid automatic repeat request acknowledgement information of the first priority.

In the above solution, L4 is a sum of T_{proc,2} and d2;
T_{proc,2} is the shortest interval between an end time point of resource position of the physical downlink control channel and a start time point of resource position of a physical uplink shared channel allowed in a communication protocol;
d2 is a positive integer less than or equal to N, or d2 is 0; wherein, N is a number of symbols included in one slot.

In the above solution, the uplink transmission of the first priority includes uplink transmission of the physical uplink shared channel of the first priority.

In the above solution, the communication device comprises a base station or a terminal.

According to a second aspect of embodiments of the present disclosure, an apparatus for processing uplink transmission is provided, which is applied to a communication device. The apparatus includes:
a determining module, configured to determine a target time point in response toan uplink transmission of a first priority and an uplink transmission of a second priority overlapping in a time domain, wherein the first priority is higher than the second priority;
a cancelling module, configured to cancel the uplink transmission of the second priority after the target time point, wherein the target time point is determined at least in part according to an available time domain position of the uplink transmission of the first priority.

In the above solution, the target time point is determined by comparing an end time point of the L1^{th} symbol after an end position of time domain resource of a physical downlink control channel where physical downlink control information for scheduling the uplink transmission of the first priority is located and a start time point of L2 symbols before a start position of time domain resource of the uplink transmission of the first priority;
or,
the target time point is determined according to a start time point of L2 symbols before a start position of resource of the uplink transmission of the first priority;
wherein, L1 is 0 or a positive integer; L2 is 0 or a positive integer.

In the above solution, the target time point is determined by comparing an end time point of the L1^{th} symbol after an end position of time domain resource of a physical downlink control channel where physical downlink control information for scheduling the uplink transmission of the first priority is located and an end time point of the L3^{th} symbol after an end position of time domain resource of a physical downlink shared channel of the first priority scheduled by the physical downlink control information;
or,
the target time point is determined according to an end time point of the L3^{th} symbol after an end position of time domain resource of a physical downlink shared channel of the first priority scheduled by physical downlink control information;
wherein, L1 is 0 or a positive integer; L3 is 0 or a positive integer.

In the above solution, the target time point is determined by comparing an end time point of the L1^{th} symbol after an end position of time domain resource of a physical downlink control channel where physical downlink control information for scheduling the uplink transmission of the first priority is located and an end time point of the L4^{th} symbol after an end position of time domain resource of a physical downlink control channel where the physical downlink control information is located;
or,
the target time point is determined according to an end time point of the L4^{th} symbol after an end position of time domain resource of a physical downlink control channel where physical downlink control information for scheduling the uplink transmission of the first priority is located;
wherein, L1 is 0 or a positive integer; L4 is 0 or a positive integer.

In the above solution, the target time point is determined according to an earlier one in the comparing.

In the above solution, L1 is a sum of T_{proc,2} and d1;
T_{proc,2} is the shortest interval between an end time point of resource position of the physical downlink control channel and a start time point of resource position of a physical uplink shared channel allowed in a communication protocol;
d1 is a positive integer less than or equal to N, or d1 is 0; wherein, N is a number of symbols included in one slot.

In the above solution, L2 is a positive integer less than or equal to N, or L2 is 0; wherein, N is a number of symbols included in one slot.

In the above solution, the apparatus further includes:
an obtaining module, configured to obtain L2 sent by a base station, wherein L2 is determined by the base station based on a terminal capability reported by the terminal;
   or,
L2 is specified by a communication protocol.

In the above solution, L3 is a sum of T_{proc,1} and d2;
T_{proc,1} is the shortest interval between an end time point of resource position of the physical downlink shared channel and a start time point of resource position of a hybrid automatic repeat request acknowledgement allowed in a communication protocol;
d2 is a positive integer less than or equal to N, or d2 is 0; wherein, N is a number of symbols included in one slot.

In the above solution, the uplink transmission of the first priority includes uplink transmission of hybrid automatic repeat request acknowledgement information of the first priority.

In the above solution, L4 is a sum of T_{proc,2} and d2;
T_{proc,2} is the shortest interval between an end time point of resource position of the physical downlink control channel and a start time point of resource position of a physical uplink shared channel allowed in a communication protocol;
d2 is a positive integer less than or equal to N, or d2 is 0; wherein, N is a number of symbols included in one slot.

In the above solution, the uplink transmission of the first priority includes uplink transmission of the physical uplink shared channel of the first priority.

According to a third aspect of embodiments of the present disclosure, a communication device is provided. The communication device includes:
a processor;
a memory, configured to store instructions executable by the processor;
wherein the processor is configured to implement the method for processing uplink transmission described in any embodiment of the present disclosure when running the executable instructions.

According to a fourth aspect of embodiments of the present disclosure, a computer storage medium is provided. The computer storage medium is stored with a computer-executable program that, when executed by a processor, the method for processing uplink transmission described in any embodiment of the present disclosure is implemented.

The technical solutions provided by embodiments of the present disclosure may include the following beneficial effects.

In embodiments of the present disclosure, the target time point is determined in response to the uplink transmission of the first priority and the uplink transmission of the second priority overlapping in the time domain, wherein the first priority is higher than the second priority; and the uplink transmission of the second priority after the target time point is cancelled, wherein the target time point is determined at least in part according to the available time domain position of the uplink transmission of the first priority. In this way, when the uplink transmission of higher priority and the uplink transmission of lower priority overlap in the time domain, the uplink transmission of lower priority after the target time point is canceled. Moreover, since the target time point is determined based on the available time domain position of the uplink transmission, the uplink transmission of the lower priority can be cancelled before the uplink transmission of the higher priority starts, thereby reducing the interference to the uplink transmission of the high priority due to cancelling the uplink transmission of the lower priority too late, thereby greatly improving the transmission quality of the uplink transmission of the first priority.

### BRIEF DESCRIPTION OF THE DRAWINGS

FIG. 1 is a schematic diagram of a wireless communication system provided by an embodiment of the present disclosure.
FIG. 2 is a schematic diagram of canceling uplink transmission of a second priority according to an example.
FIG. 3 is a flowchart showing a method for processing uplink transmission according to an exemplary embodiment.
FIG. 4 is a flowchart showing a method for processing uplink transmission according to an exemplary embodiment.
FIG. 5 is a schematic diagram of canceling uplink transmission of a second priority according to an example.
FIG. 6 is a block diagram of an apparatus for processing uplink transmission according to an exemplary embodiment.
FIG. 7 is a block diagram of a terminal according to an exemplary embodiment.
FIG. 8 is a block diagram of a base station according to an exemplary embodiment.

### DETAILED DESCRIPTION

Exemplary embodiments will be described in detail herein, examples of which are illustrated in the accompanying drawings. Where the following description refers to the drawings, the same numerals in different drawings refer to the same or similar elements unless otherwise indicated. The implementations described in the exemplary embodiments below are not intended to represent all implementations consistent with this disclosure. Rather, they are merely examples of apparatus and methods consistent with some aspects of the present disclosure as recited in the appended claims.

The terms used in the embodiments of the present disclosure are only for the purpose of describing particular embodiments, and are not intended to limit the embodiments of the present disclosure. As used in the embodiments of the present disclosure and the appended claims, the singular forms "a," "the," and "said" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in embodiments of the present disclosure to describe various information, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the words "if" as used herein can be interpreted as "in a case of" or "when" or "in response to determining."

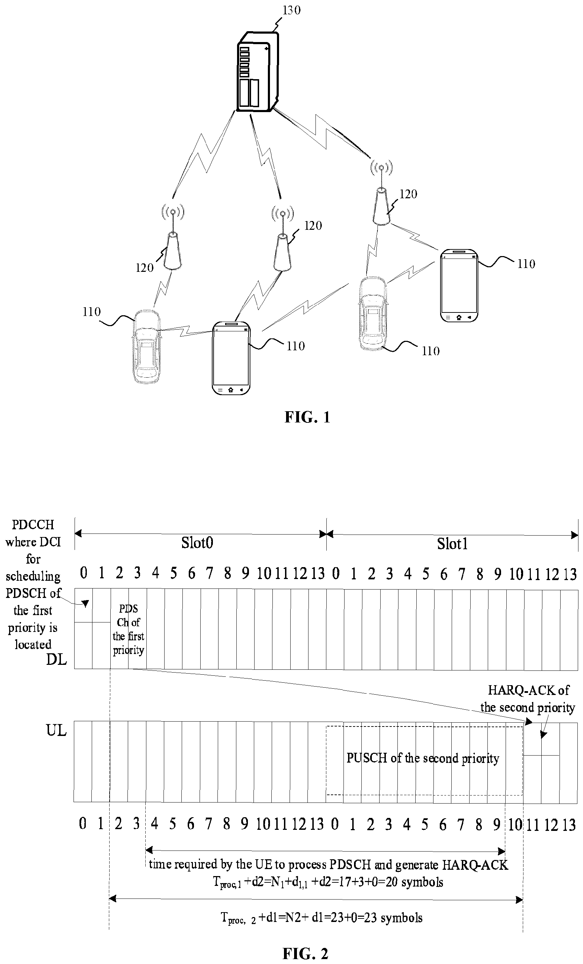

Please refer to FIG. 1, which shows a schematic diagram of a wireless communication system provided by an embodiment of the present disclosure. As shown in FIG. 1, the wireless communication system is a communication system based on cellular mobile communication technology, and the wireless communication system may include: several terminals 110 and several base stations 120.

The terminal 110 may be a device that provides voice and/or data connectivity to the user. The terminal 110 may communicate with one or more core networks via a Radio Access Network (RAN), and the terminal 11 may be an IoT terminal such as a sensor device, a mobile phone (or "cellular" phone) and a computer of the IoT terminal, for example, may be a fixed, portable, pocket, hand-held, computer built-in or a vehicle-mounted device, for example, Station (STA), subscriber unit, subscriber station, mobile station, mobile, remote station, access point, remote terminal, access terminal, user terminal, user agent, user device, or user equipment (UE). Alternatively, the terminal 110 may also be a device of an unmanned aerial vehicle. Alternatively, the terminal 110 may also be a vehicle-mounted device, for example, a trip computer with a wireless communication function, or a wireless communication device externally connected to the trip computer. Alternatively, the terminal 110 may also be a roadside device, for example, a street light, a signal light, or other roadside devices with a wireless communication function.

The base station 120 may be a network-side device in the wireless communication system. The wireless communication system may be the 4th generation mobile communication (4G) system, also known as Long Term Evolution (LTE) system; or, the wireless communication system may also be a 5G system, also known as new radio (NR) system or 5G NR system. Alternatively, the wireless communication system may also be a next-generation system of the 5G system. The access network in the 5G system may be called NG-RAN (New Generation-Radio Access Network).

The base station 120 may be an evolved base station (eNB) used in the 4G system. Alternatively, the base station 120 may also be a base station (gNB) that adopts a centralized-distributed architecture in the 5G system. When the base station 120 adopts the centralized-distributed architecture, it usually includes a central unit (CU) and at least two distributed units (DUs). The central unit is provided with protocol stacks of a Packet Data Convergence Protocol (PDCP) layer, a Radio Link Control (RLC) layer, and a Media Access Control (MAC) layer; a physical (PHY) layer protocol stack is provided in the distributed unit, and the specific implementation of the base station 12 is not limited in embodiments of the present disclosure.

A wireless connection can be established between the base station 120 and the terminal 110 through a radio air interface. In different embodiments, the radio air interface is a radio air interface based on the fourth generation mobile communication network technology (4G) standard; or, the radio air interface is a radio air interface based on the fifth generation mobile communication network technology (5G) standard, such as a new air interface; or, the radio air interface may also be a radio air interface based on a next-generation mobile communication network technology standard of 5G.

In some embodiments, an E2E (End to End) connection may also be established between the terminals 11, for example, in scenarios such as V2V (vehicle to vehicle) communication, V2I (vehicle to Infrastructure) communication and V2P (vehicle to pedestrian) communication in V2X (vehicle to everything) communication.

In some embodiments, the above wireless communication system may further include a network management device 130.

Several base stations 120 are respectively connected to the network management device 130. The network management device 130 may be a core network device in the wireless communication system. For example, the network management device 130 may be a mobility management entity (MME) in an evolved packet core (EPC) network. Alternatively, the network management device may also be other core network devices, such as a serving gateway (SGW), a public data network gateway (PGW), a policy and charging rules function (PCRF) or home subscriber server (HSS), etc. The implementation form of the network management device 130 is not limited in embodiments of the present disclosure.

At present, if in a slot, an uplink transmission of a first priority and an uplink transmission of a second priority overlap in the time domain, wherein the first priority is higher than the second priority, the following methods are mainly used to carry out processing of the uplink transmission.

The terminal will cancel the uplink transmission of the second priority on T_{proc,2}+d1 symbols after a time domain end position of a Physical Downlink Control Channel (PDCCH) for scheduling the transmission of the first priority.

T_{proc,2} is the shortest distance between the time domain end position of the PDCCH for scheduling the physical uplink shared channel (PUSCH) and the time domain start position of the PUSCH. d1 is determined based on the terminal capability of the terminal, and d1 may be 0, 1, or 2.

The value of T_{proc,2} is specified based on the communication protocol 3gpp TS 38.214.

In some embodiments, the terminal may also cancel the uplink transmission of the second priority on T _{proc,2}+d_2,1+d1 symbols after the time domain end position of the physical downlink control channel for scheduling the transmission of the first priority. d_2,1 may also be 0, 1 or 2, etc.

At the same time, the processing time of the channel with the first priority is increased by d2 symbols. Here, adding d2 symbols refers to adding d2 symbols on the basis of T_{proc,2} or T_{proc,1}. T_{proc,1} is the shortest spacing from the time domain end position of the physical downlink shared channel (PDSCH) to the time domain start position of corresponding transmitted Hybrid Automatic Repeat request acknowledgement (HARQ-ACK). The value of T_{proc,1} is specified based on the communication protocol 3gpp TS 38.214. d2 is determined based on the terminal capability of the terminal, and the d2 may be 0, 1 or 2.

In order to better understand the technical solutions described in embodiments of the present disclosure, first, a scenario of canceling the uplink transmission of the second priority is described through an embodiment.

If the terminal UE is in an FDD system, the sub-carrier bandwidths of the wireless channels used for transmitting uplink and downlink data are both 60KHz, and the terminal capability information used by the UE is capability 1. The RRC parameter configured by the base station for the terminal is dmrs-AdditionalPosition = pos0.
d1=0 and d2=0 are obtained by the UE. The UE is scheduled for one uplink transmission of PUSCH of a second priority, one downlink transmission of PDSCH of a first priority, and one uplink transmission of HARQ-ACK information of the physical uplink control channel (PUCCH) transmission of the first priority. As shown in FIG. 2, the PUCCH and the PDCCH overlap on slot 1; the PUSCH lasts for 14 symbols on slot 1. The PDCCH where the downlink control information (DCI) for scheduling the PDSCH of the first priority is 2 symbols; the PDSCH of the first priority is 2 symbols; the PDSCH and the PDCCH do not overlap in the time domain, and the PDSCH immediately follows the PDCCH. Here, the manner in which the PDSCH occupies resources is the PDSCH mapping Type B.

According to the method in the related art, the uplink transmission of the second priority after T_{proc,2}+d1=N2+d1=23+0=23 symbols after the end position of the PDCCH channel time domain resource will be cancelled, that is, as in FIG. 2, the uplink transmission of PUSCH of the second priority after the 11^{th} symbol in slot 1 is cancelled.

However, the time point when the UE can send the HARQ-ACK information is after T_{proc1}+d2=N₁+d_{1,1}+d2=17+3+0=20 symbols after the end of the PDSCH channel; that is, after 20+2=22 symbols after the end of the PDCCH channel. Here, N₂, N₁ and d_{1,1} are specified by the communication protocol 3gpp TS 38.214.

In this way, in this embodiment, although the uplink transmission of the PUSCH on symbols 11, 12 and 13 in slot 1 will be cancelled, the uplink transmission of the PUSCH on other symbols still needs to be transmitted. The uplink transmission of the HARQ-ACK starts at symbol 10 of slot 1. In this way, the uplink transmission of the first priority at symbol 10 (i.e., the uplink transmission of the HARQ-ACKE) will collide with the uplink transmission of the second priority (i.e., the uplink transmission of the PUSCH).

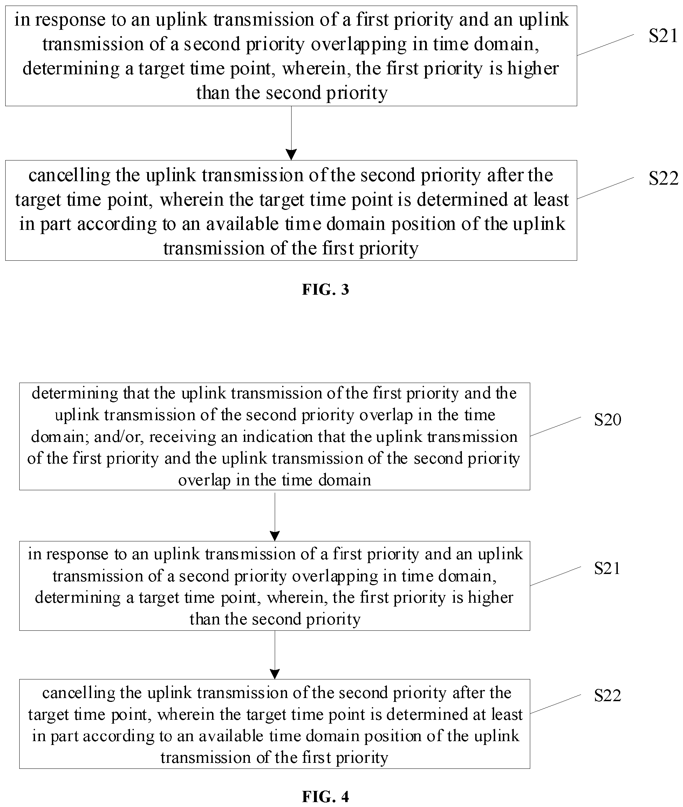

As shown in FIG. 3, an embodiment of the present disclosure provides a method for processing uplink transmission, and the method includes the following steps:
step S21, in response to an uplink transmission of a first priority and an uplink transmission of a second priority overlapping in time domain, determining a target time point, wherein, the first priority is higher than the second priority; and
step S22, cancelling the uplink transmission of the second priority after the target time point, wherein the target time point is determined at least in part according to an available time domain position of the uplink transmission of the first priority.

The method described in embodiments of the present disclosure is applied in a communication device.

In an embodiment, the communication device is a terminal. Here, the terminal includes, but is not limited to, at least one of the following: a mobile phone, a calculator, a server, a transceiver device, a tablet device, and a medical device. In this embodiment, cancelling the uplink transmission after the target time point refers to canceling sending of the uplink transmission of the second priority after the target time point.

In another embodiment, the communication device is a base station. Here, the base station is an interface device for the user equipment to access the Internet. The base station may be various types of base stations, for example, a 3G base station, a 4G base station, a 5G base station, or other evolved base stations. In this embodiment, cancelling the uplink transmission of the second priority after the target time point refers to: receiving the uplink transmission of the second priority before the target time point, but not receiving the uplink transmission of the second priority after the target time point; or cancelling the scheduling of the uplink transmission of the second priority after the target time point.

It can be understood that, the method described in the embodiment of the present disclosure is applied to a case in which the uplink transmission of the first priority and the uplink transmission of the second priority overlap in the time domain in one slot.

In the method described in the embodiment of the present disclosure, if there are multiple repetitions for uplink transmission, then step S21 and step S22 may be performed for each repetition.

In an embodiment, the first priority is a high priority, and the second priority is a low priority. Here, the high priority and the low priority are relative terms, and under the same standard, the high priority is higher than the low priority.

Here, the service corresponding to the transmission data of the first priority is the first type of service, and the service corresponding to the transmission data of the second priority is the second type of service; wherein, the service priority of the first type of service is higher than the service priority of the second type of service.

For example, the first type of service is URLLC service, and the second type of service is eMBB service. It can be understood that the reliability and/or low latency of the first type of service is relatively high, and the reliability and/or latency of the second type of service is relatively low. In this way, when the first type of service and the second type of service are transmitted, and there is overlap in the time domain, the transmission of the first type of service can be prioritized and the transmission of the second type of service can be cancelled.

In some embodiments, as shown in FIG. 4, the method further includes:
step S20, determining that the uplink transmission of the first priority and the uplink transmission of the second priority overlap in the time domain; and/or, receiving an indication that the uplink transmission of the first priority and the uplink transmission of the second priority overlap in the time domain.

Here, the available time domain position may be a time domain position in a communication protocol where uplink transmission of the first priority is allowed to be sent. For example, as shown in FIG. 2, in slot 1, the available time domain position of the HARQ-ACK may be symbols 10, 11, 12, and 14.

Here, the communication protocol may include, but is not limited to, technical documents of the 3GPP standardization organization. For example, the communication protocol may be standard technical specifications and technical reports, and the like.

Here, the communication protocol may be applied to a third generation (3G) system, a fourth generation (4G) system, or a fifth generation (5G) system to deploy and implement various communication networks and wireless communication in the communication networks. Here, the fourth-generation system may be a Long Term Evolution (LTE) system or an LTE-Advanced (LTE-A) system, and the fifth-generation system may be a New Radio (NR) system.

In an embodiment, the target time point is earlier than the start time point of the uplink transmission of the first priority.

For example, as shown in FIG. 2, the start time point of the uplink transmission of the HARQ-ACK of the first priority in slot 1 is at symbol 10, and the uplink transmission of the PUSCH of the second priority lasts for 14 symbols in slot 1. If the target time point is earlier than the start time point of the HARQ-ACK, it is determined that the target time point is any symbol from symbol 0 to symbol 9.

If the target time point is symbol 9, the terminal will cancel the uplink transmission of the PUSCH of the second priority from symbols 9 to 13. In this way, the uplink transmission of the PUSCH of the second priority does not overlap with the uplink transmission of the HARQ-ACK of the first priority in the time domain, and the uplink transmission of the PUSCH of the second priority will not affect the uplink transmission of HARQ-ACK of the first priority.

If the target time point is symbol 8, the terminal will cancel the uplink transmission of the PUSCH of the second priority from symbol 8 to symbol 13. In this way, the uplink transmission of the PUSCH of the second priority does not overlap with the uplink transmission of the HARQ-ACK of the first priority in the time domain, and the uplink transmission of the PUSCH of the second priority will not affect the uplink transmission of the HARQ-ACK of the first priority.

If the target time point is symbol 7, the terminal will cancel the uplink transmission of the PUSCH of the second priority from symbols 7 to 13; if the target time is symbol 6, the terminal will cancel the uplink transmission of the PUSCH of the second priority from symbols 6 to 13; and so on, if the target time point is symbol 0, the terminal will cancel the uplink transmission of the PUSCH of the second priority from symbols 0 to 13. In this way, the uplink transmission of the PUSCH of the second priority does not overlap with the uplink transmission of the HARQ-ACK of the first priority in the time domain, and the uplink transmission of the PUSCH of the second priority will not affect the uplink transmission of the HARQ-ACK of the first priority.

In another embodiment, the target time point may also be the start time point of the uplink transmission of the first priority. For example, as shown in FIG. 2, if the target time point is the start time point of the uplink transmission of the first priority, the target time point is the symbol 10 of slot 1. In this case, the terminal will cancel the uplink transmission of the PUSCH of the second priority from symbols 10 to 13 in slot 1. In this way, the uplink transmission of the PUSCH of the second priority does not overlap with the uplink transmission of the HARQ-ACK of the first priority in the time domain, and the uplink transmission of the PUSCH of the second priority will not affect the uplink transmission of the HARQ-ACK of the first priority.

In embodiments of the present disclosure, if the uplink transmission of the first priority and the uplink transmission of the second priority overlap in the time domain, the target time point can be determined based on the available time domain position of the uplink transmission of the first priority, and the uplink transmission of the second priority after the target time point can be cancelled. Moreover, since the target time point is determined based on the available time domain position of uplink transmission, the uplink transmission of the low priority can be canceled before the uplink transmission of the high priority starts, thereby reducing the interference to the uplink transmission of the high priority due to cancelling the uplink transmission of the low priority too late, thereby greatly improving the transmission quality of the uplink transmission of the first priority.

Moreover, if the target time point is earlier than the start time point of the first priority, the uplink transmission of the first priority and the uplink transmission of the second priority do not overlap in the time domain, so that there is no transmission conflict between the uplink transmission of the first priority and the uplink transmission of the second priority, and the transmission quality of the uplink transmission of the first priority is improved.

In some embodiments, the target time point is determined by comparing the end time point of the L1^{th} symbol after the end position of the time domain resource of the physical downlink control channel where the physical downlink control information for scheduling the uplink transmission of the first priority is located and the start time point of the L2 symbols before the start position of the time domain resource of the uplink transmission of the first priority;
or,
the target time point is determined according to the start time point of the L2 symbols before the start position of the resource of the uplink transmission of the first priority;
wherein, L1 is 0 or a positive integer; L2 is 0 or a positive integer.

In an embodiment, the target time point is determined based on an earlier one in the comparing.

For example, the target time point is determined based on the earlier one of the end time point of the L1^{th} symbol after the end position of the time domain resource of the physical downlink control channel where the physical downlink control information for scheduling the uplink transmission of the first priority is located and the start time point of the L2 symbols before the start position of the time domain resource of the uplink transmission of the first priority.

Of course, in other embodiments, the target time point is not always determined according to earlier one in the comparing. For example, it may also be: when both the two time points in the comparing can guarantee the normal transmission of the uplink transmission of the first priority, the target time point is determined according to the later one in the comparing. In this way, while ensuring the normal transmission of the uplink transmission of the first priority, the characteristic of transmission resource utilization is also taken into consideration.

In some embodiments, L1 is a sum of T_{proc,2} and d1;
T_{proc,2} is the shortest interval between the end time point of the resource position of the physical downlink control channel and the start time point of the resource position of the physical uplink shared channel allowed in the communication protocol;
d1 is a positive integer less than or equal to N, or d1 is 0; wherein, N is the number of symbols included in one slot.

Here, T_{proc,2} may also be the time required to prepare the PUSCH.

In an embodiment, the one slot includes 14 symbols.

In an embodiment, d1 is 0, 1, 2 or 3. As such, one d1 includes only a smaller number of symbols in one slot.

Here, d1 may be determined based on the terminal capability of the terminal; based on different terminals, d1 has different values. Here, the value of T_{proc,2} is specified based on the communication protocol 3gpp TS 38.214.

In some embodiments, L2 is a positive integer less than or equal to N, or L2 is 0; wherein, N is the number of symbols included in one slot.

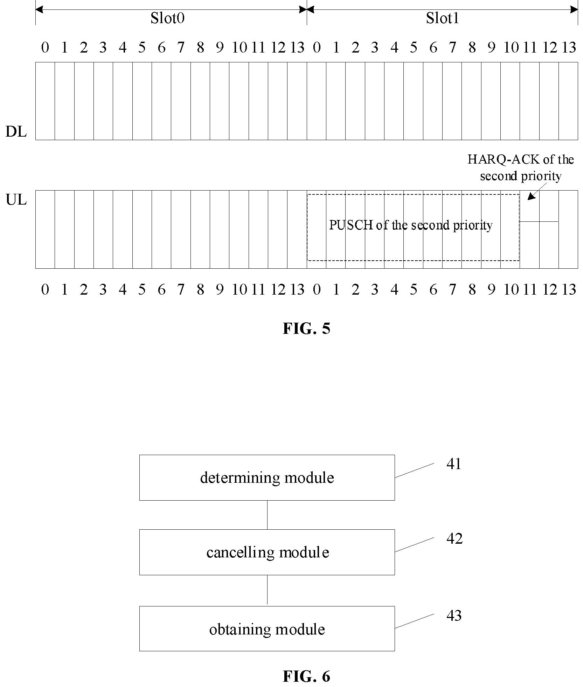

For example, as shown in FIG. 5, the start time point of the uplink transmission of the HARQ-ACK of the first priority in slot 1 is symbol 10, and the transmission duration of the uplink transmission of the HARQ-ACK is 2 symbols, and the uplink transmission of PUSCH of the second priority lasts for 14 symbols on slot 1.

If it is determined that the start time point of the L2 symbols before the start position of the time domain resource of the uplink transmission of the first priority is the target time point, for example, if L2 is 0, the terminal cancels the uplink transmission of the PUSCH of the second priority from symbols 10 to 13 in slot 1. In this way, the uplink transmission of the HARQ-ACK of the first priority at symbol 10 and symbol 11 is guaranteed.

For another example, if L2 is 1, the terminal cancels the uplink transmission of the PUSCH of the second priority from symbols 9 to 13 in slot 1. In this way, the uplink transmission of the HARQ-ACK of the first priority at symbol 10 and symbol 11 is guaranteed.

If it is determined that the target time point is determined based on the earlier one of the end time point of the L1^{th} symbol after the end position of the time domain resource of the physical downlink control channel where the physical downlink control information for scheduling the uplink transmission of the first priority is located and the start time point of the the L2 symbols before the start position of the time domain resource of the uplink transmission of the first priority, for example, if the end time point of the L1^{th} symbol is at symbol 9, L2 is 0, and the terminal determines that the end time point of the L1^{th} symbol is the earlier one, the terminal cancels the uplink transmission of the PUSCH of the second priority from symbols 9 to 13. In this way, the uplink transmission of the HARQ-ACK of the first priority at symbol 10 and symbol 11 is guaranteed.

For another example, if the end time point of the L1^{th} symbol is at symbol 11, and L2 is 0, the terminal cancels the uplink transmission of the PUSCH of the second priority from symbols 10 to 13 in slot 1. In this way, the uplink transmission of the HARQ-ACK of the first priority at symbol 10 and symbol 11 is guaranteed.

In embodiments of the present disclosure, the start time point of the L2 symbols before the start position of the time domain resource of the uplink transmission of the first priority can be directly selected to determine the target time, so that the uplink transmission of the second priority after the start time point of the L2^{th} symbol can be cancelled.

Or, the start time point of the L2 symbols before the start position of the time domain resource of the uplink transmission of the first priority is compared with the end time point of the L1^{th} symbol after the end position of the time domain resource of the physical downlink control channel where the DCI for scheduling the uplink transmission of the first priority is located, and the earlier of the two is selected to determine the target time point, so that the uplink transmission of the second priority after the earlier of the start time point of the L2^{th} symbol and the end time point of the L1^{th} symbol can be cancelled. In this way, the uplink transmission of the first priority and the uplink transmission of the second priority may not overlap in the time domain, thereby ensuring the transmission quality of the uplink transmission of the first priority.

Of course, if in other embodiments, the end time point of the L1^{th} symbol is at the same symbol as the start time point of the L2^{th} symbol, then any one of the end time point of the L1^{th} symbol and the start time point of the L2^{th} symbol can be selected to determine the target time point.

In some embodiments, the communication device is a terminal;
the method further includes:
obtaining L2 sent by the base station, wherein L2 is determined by the base station based on the terminal capability reported by the terminal;
   or,
L2 is specified by the communication protocol.

In embodiments of the present disclosure, the value of L2 may be specified by a communication protocol, for example, L2 may be a positive integer such as 0, 1, 2, or 3.

Alternatively, L2 may also be allocated by the base station. For example, the base station receives the terminal capability information reported by the terminal; the base station determines the value of L2 based on the terminal capability information, and sends the value of L2 to the terminal.

Of course, if the terminal does not obtain the value of L2, and L2 is not determined by the communication protocol, the terminal may also configure the value of L2 to be 0.

In embodiments of the present disclosure, by setting L2, it can be considered that the terminal needs a certain buffer time when switching between different uplink transmissions. In this way, it can be ensured that the uplink transmission of the second priority is cancelled before the start time point of the uplink transmission of the first priority, and the buffer time for switching between different uplink transmissions is also guaranteed.

Of course, in some application scenarios, if the capability of the terminal is relatively strong, it may also be considered that the buffer time of L2 is not required. In this case, the value of L2 may be set to 0. In this application scenario, the uplink transmission of the second priority at and after the symbol at the start time point of the uplink transmission of the first priority can be cancelled, and the uplink transmission of the second priority on redundant symbols is not cancelled, so as to realize the uplink transmission of the second priority as long as possible while ensuring the transmission quality of the uplink transmission of the first priority.

In some embodiments, the target time point is determined by comparing the end time point of the L1^{th} symbol after the end position of the time domain resource of the physical downlink control channel where the physical downlink control information for scheduling the uplink transmission of the first priority is located and the end time point of the L3^{th} symbol after the end position of the time domain resource of the physical downlink shared channel of the first priority scheduled by the physical downlink control information;
or,
the target time point is determined according to the end time point of the L3^{th} symbol after the end position of the time domain resource of physical downlink shared channel of the first priority scheduled by the physical downlink control information;
wherein, L1 is 0 or a positive integer; L3 is 0 or a positive integer.

Here, the uplink transmission of the first priority includes: uplink transmission of HARQ-ACK information of the first priority.

In an embodiment, the target time point is determined based on an earlier one in the comparing.

For example, the target time point is determined based on the earlier one of the end time point of the L1^{th} symbol after the end position of the time domain resource of the physical downlink control channel where the physical downlink control information for scheduling the uplink transmission of the first priority is located and the end time point of the L3^{th} symbol after the end position of the time domain resource of the physical downlink shared channel of the first priority scheduled by the physical downlink control information

Of course, in other embodiments, the target time point is not always determined according to the earlier one in the comparing. For example, it may also be: when both the two time points in the comparing can guarantee the normal transmission of the uplink transmission of the first priority, the target time point is determined according to the later one in the comparing. In this way, while ensuring the normal transmission of the uplink transmission of the first priority, the characteristic of transmission resource utilization is also taken into consideration.

In an embodiment, L3 is a sum of T_{proc,1} and d2;
T_{proc,1} is the shortest interval between the end time point of the resource position of the physical downlink shared channel and the start time point of the resource position of the HARQ-ACK allowed in the communication protocol;
d2 is a positive integer less than or equal to N, or d2 is 0; wherein, N is the number of symbols included in one slot.

Here, T_{proc,1} may also be the time required to prepare the PDSCH.

In an embodiment, d2 is 0, 1, 2 or 3. As such, one d1 includes only a smaller number of symbols in one slot.

Here, d2 may be determined based on the terminal capability of the terminal; based on different terminals, the d2 has different values. Here, the value of T_{proc,1} is specified based on the communication protocol 3gpp TS 38.214.

In an embodiment of the present disclosure, if it is determined that the end time point of the L3^{th} symbol is the target time point, for example, as shown in FIG. 2, if the sum of T_{proc,1} and d2 is 20+0=20 symbols, and the end time point of the L3^{th} symbol is at symbol 9, the terminal cancels the uplink transmission of the PUSCH of the second priority from symbol 10 to symbol 13. In this way, the uplink transmission of the HARQ-ACK of the first priority at symbol 10 and symbol 11 is guaranteed.

If it is determined that the earlier one of the end time point of the L3^{th} symbol and the end time point of the L1^{th} symbol is the target time point, for example, if the sum of T_{proc,1} and d2 is 20+0=20 symbols, the end time point of the L3^{th} symbol is at symbol 9, the sum of T_{proc,2} and d1 is 23+0=23 symbols, and the end time point of the L1^{th} symbol is at symbol 10, the terminal determines that the end time point of the L3^{th} symbol is the earlier one, and the terminal cancels the uplink transmission of the PUSCH of the second priority from symbol 10 to the symbol 13. In this way, the uplink transmission of the HARQ-ACK of the first priority at symbol 10 and symbol 11 is guaranteed.

Of course, in other embodiments, if the position of the sum of T_{proc,1} and d2 in the time domain is earlier than the position of the sum of T_{proc,2} and d1 in the time domain, the terminal determines the end time point of the L1^{th} symbol is the earlier one. In this way, in this embodiment, it can also be ensured that the uplink transmission of the second priority is cancelled before the uplink transmission of the HARQ-ACK of the first priority.

In embodiments of the present disclosure, the end time point of the L3^{th} symbol after the end position of the time domain resource of the physical downlink shared channel of the first priority scheduled by the physical downlink control information can be directly selected to determine the target time point, so that the uplink transmission of the second priority after the start time point of the L3^{th} symbol can be cancelled.

Or, the end time point of the L1^{th} symbol after the end position of the time domain resource of the physical downlink control channel where the physical downlink control information for scheduling the uplink transmission of the first priority is located is compared with the end time point of the L3^{th} symbol after the end position of the time domain resource of the physical downlink shared channel of the first priority scheduled by the physical downlink control information, and the earlier time point of the two is selected to determine the target time point, so that the uplink transmission of second priority after the earlier start time point of the L1^{th} symbol and the L3^{th} symbol can be cancelled. In this way, the uplink transmission of the first priority and the uplink transmission of the second priority may not overlap in the time domain, thereby ensuring the transmission quality of the uplink transmission of the first priority.

Of course, if in other embodiments, the end time point of the L1^{th} symbol is the same as the start time point of the L3^{th} symbol, then any one of the end time point of the L1^{th} symbol and the start time point of the L3^{th} symbol can be selected to determine the target time point.

In some embodiments, the target time point is determined by comparing the end time point of the L1^{th} symbol after the end position of the time domain resource of the physical downlink control channel where the physical downlink control information for scheduling the uplink transmission of the first priority is located and the end time point of the L4^{th} symbol after the end position of the time domain resource of the physical downlink control channel where the physical downlink control information is located;
or,
the target time point is determined according to the end time point of the L4^{th} symbol after the end position of the time domain resource of the physical downlink control channel where the physical downlink control information for scheduling the uplink transmission of the first priority is located;
wherein, L1 is 0 or a positive integer; L4 is 0 or a positive integer.

Here, the uplink transmission of the first priority includes: uplink transmission of a physical uplink shared channel of the first priority.

In an embodiment, the target time point is determined based on the earlier one in the comparing.

For example, the target time point is determined based on the earlier one of the end time point of the L1^{th} symbol after the end position of the time domain resource of the physical downlink control channel where the physical downlink control information for scheduling the uplink transmission of the first priority is located, and the end time point of the L4^{th} symbol after the end position of the time domain resource of the physical downlink control channel where the physical downlink control information is located.

Of course, in other embodiments, the target time point is not always determined according to the earlier one in the comparing. For example, it may also be: when both the two time points in the comparing can guarantee the normal transmission of the uplink transmission of the first priority, the target time point is determined according to the later one in the comparing. In this way, while ensuring the normal transmission of the uplink transmission of the first priority, the characteristic of transmission resource utilization is also taken into consideration.

In some embodiments, L4 is the sum of T_{proc,2} and d2;
Tproc,2 is the shortest interval between the end time point of the resource position of the physical downlink control channel and the start time point of the resource position of the physical uplink shared channel allowed in the communication protocol;
d2 is a positive integer less than or equal to N, or d2 is 0; wherein, N is the number of symbols included in one slot.

In embodiments of the present disclosure, the end time point of the L4^{th} symbol after the end position of the time domain resource of the physical downlink control channel where the physical downlink control information is located may be directly selected to determine the target time point, so as to cancel the uplink transmission of the second priority after the start time point of the L4^{th} symbol.

Or, the end time point of the L1^{th} symbol after the end position of the time domain resource of the physical downlink control channel where the physical downlink control information for scheduling the uplink transmission of the first priority is located is compared with the end time point of the L4^{th} symbol, and the earlier time point of the two is selected to determine the target time point, so that the uplink transmission of the second priority after the earlier start time point of the L1^{th} symbol and the L4^{th} symbol can be cancelled. In this way, the uplink transmission of the first priority and the uplink transmission of the second priority may not overlap in the time domain, thereby ensuring the transmission quality of the uplink transmission of the first priority.

Of course, if in other embodiments, the end time point of the L1^{th} symbol and the start time point of the L4^{th} symbol are the same, then any one of the end time point of the L1^{th} symbol and the start time point of the L4^{th} symbol may be selected to determine the target time point.

It should be noted that, the foregoing embodiments of the present disclosure are mainly described by taking a terminal as an example. However, it is obvious to those skilled in the art that the above content can also be applied to the base station accordingly, and the corresponding technical solutions and embodiments have been included in the protection scope of the present disclosure, and will not be repeated here.

As shown in FIG. 6, embodiments of the present disclosure provide an apparatus for processing uplink transmission is provided, which is applied to a communication device. The apparatus includes a determining module 41 and a cancelling module 42.

The determining module 41 is configured to determine a target time point in response to uplink transmission of a first priority and uplink transmission of a second priority overlapping in a time domain, wherein the first priority is higher than the second priority.

The cancelling module 42 is configured to cancel the uplink transmission of the second priority after the target time point, wherein the target time point is determined at least in part according to an available time domain position of the uplink transmission of the first priority.

Here, the communication device includes a base station or a terminal.

In some embodiments, the target time point is determined by comparing an end time point of the L1^{th} symbol after an end position of time domain resource of a physical downlink control channel where physical downlink control information for scheduling the uplink transmission of the first priority is located and a start time point of L2 symbols before a start position of time domain resource of the uplink transmission of the first priority;
or,
the target time point is determined according to a start time point of L2 symbols before a start position of resource of the uplink transmission of the first priority;
wherein, L1 is 0 or a positive integer; L2 is 0 or a positive integer.

In some embodiments, the target time point is determined by comparing an end time point of the L1^{th} symbol after an end position of time domain resource of a physical downlink control channel where physical downlink control information for scheduling the uplink transmission of the first priority is located and an end time point of the L3^{th} symbol after an end position of time domain resource of a physical downlink shared channel of the first priority scheduled by the physical downlink control information;
or,
the target time point is determined according to an end time point of the L3^{th} symbol after an end position of time domain resource of a physical downlink shared channel of the first priority scheduled by physical downlink control information;
wherein, L1 is 0 or a positive integer; L3 is 0 or a positive integer.

In some embodiments, the target time point is determined by comparing an end time point of the L1^{th} symbol after an end position of time domain resource of a physical downlink control channel where physical downlink control information for scheduling the uplink transmission of the first priority is located and an end time point of the L4^{th} symbol after an end position of time domain resource of a physical downlink control channel where the physical downlink control information is located;
or,
the target time point is determined according to an end time point of the L4^{th} symbol after an end position of time domain resource of a physical downlink control channel where physical downlink control information for scheduling the uplink transmission of the first priority is located;
wherein, L1 is 0 or a positive integer; L4 is 0 or a positive integer.

In some embodiments, the target time point is determined according to an earlier one in the comparing.

In some embodiments, L1 is a sum of T_{proc,2} and d1;
T_{proc,2} is the shortest interval between an end time point of resource position of the physical downlink control channel and a start time point of resource position of a physical uplink shared channel allowed in a communication protocol;
d1 is a positive integer less than or equal to N, or d1 is 0; wherein, N is a number of symbols included in one slot.

In some embodiments, L2 is a positive integer less than or equal to N, or L2 is 0; wherein, N is a number of symbols included in one slot.

In some embodiments, the apparatus further includes:
an obtaining module 43, configured to obtain L2 sent by a base station, wherein L2 is determined by the base station based on a terminal capability reported by the terminal;
   or,
L2 is specified by a communication protocol.

In some embodiments, L3 is a sum of T_{proc,1} and d2;
T_{proc,1} is the shortest interval between an end time point of resource position of the physical downlink shared channel and a start time point of resource position of a hybrid automatic repeat request acknowledgement allowed in a communication protocol;
d2 is a positive integer less than or equal to N, or d2 is 0; wherein, N is a number of symbols included in one slot.

In some embodiments, the uplink transmission of the first priority includes uplink transmission of hybrid automatic repeat request acknowledgement information of the first priority.

In some embodiments, L4 is a sum of T_{proc,2} and d2;
T_{proc,2} is the shortest interval between an end time point of resource position of the physical downlink control channel and a start time point of resource position of a physical uplink shared channel allowed in a communication protocol;
d2 is a positive integer less than or equal to N, or d2 is 0; wherein, N is a number of symbols included in one slot.

In some embodiments, the uplink transmission of the first priority includes uplink transmission of the physical uplink shared channel of the first priority.

Regarding the apparatus in the above embodiments, the specific manner in which each module performs operations has been described in detail in embodiments of the method, and will not be described in detail here.

An embodiment of the present disclosure provides a communication device, and the communication device includes:
a processor;
a memory configured to store instructions executable by the processor;
wherein, the processor is configured to implement the method for processing uplink transmission described in any embodiment of the present disclosure when running the executable instructions.

Here, the communication device includes a terminal or a base station.

The processor may include various types of storage media, which are non-transitory computer storage media that can continue to memorize and store information thereon after the communication device is powered off. Here, the communication device includes a base station or a user equipment.

The processor may be connected to the memory through a bus or the like, for reading the executable program stored on the memory, for example, at least one of the methods shown in FIGS. 3 to 4.

An embodiment of the present disclosure provides a computer storage medium. The computer storage medium is stored with a computer-executable program that, when executed by a processor, the method for processing uplink transmission described in any embodiment of the present disclosure, for example, at least one of the methods shown in FIGS. 3 to 4, is implemented.

Regarding the apparatus in the above embodiments, the specific manner in which each module performs operations has been described in detail in the embodiments of the method, and will not be described in detail here.

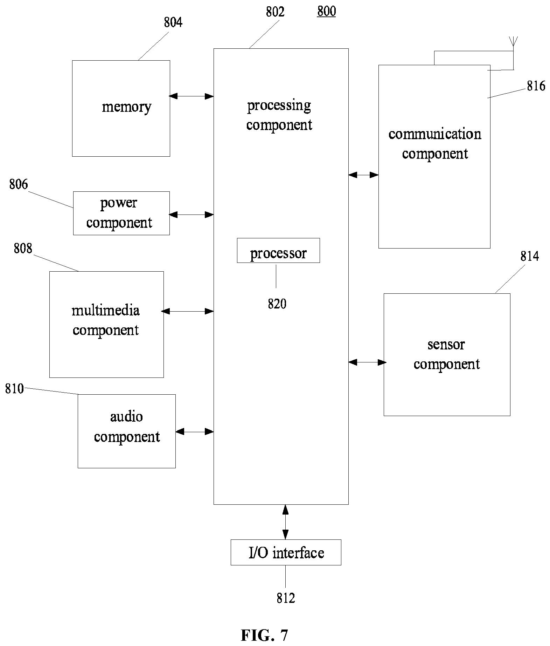

FIG. 7 is a block diagram of a terminal (UE) 800 according to an exemplary embodiment. For example, the terminal 800 may be a mobile phone, a computer, a digital broadcasting terminal, a messaging transceiver, a game console, a tablet device, a medical equipment, a fitness equipment, a personal digital assistant, etc.

Referring to FIG. 7, the terminal 800 may include one or more of the following components: a processing component 802, a memory 804, a power component 806, a multimedia component 808, an audio component 810, an input/ output (I/O) interface 812, a sensor component 814 and a communication component 816.

The processing component 802 typically controls overall operations of the terminal 800, such as the operations associated with display, data communications, telephone call, camera operations, and recording operations. The processing component 802 may include one or more processors 820 to execute instructions so as to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input an audio signal. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an opened/closed status of the terminal 800, relative positioning of components (e.g., the display and the keypad) of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the terminal 800 and other apparatus. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In an exemplary embodiment, there is also provided a non-transitory computer-readable storage medium including instructions, such as a memory 804 including instructions, which are executable by the processor 820 of the terminal 800 to perform the above method. For example, the non-transitory computer-readable storage medium may be ROM, random access memory (RAM), CD-ROM, magnetic tape, floppy disk, optical data storage device, and the like.

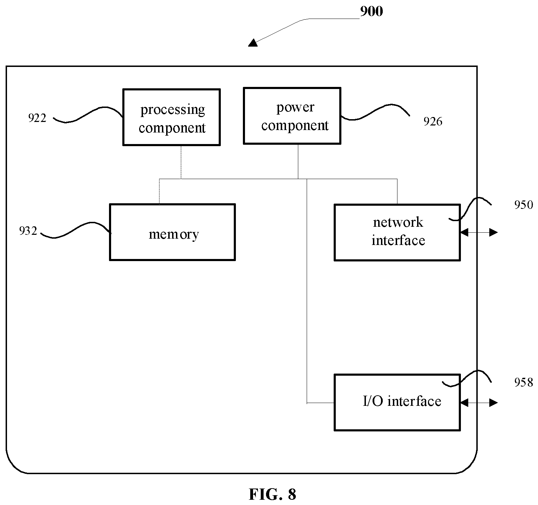

As shown in FIG. 8, an embodiment of the present disclosure shows a structure of a base station. For example, the base station 900 may be provided as a network-side device. Referring to FIG. 8, the base station 900 includes a processing component 922, which further includes one or more processors, and a memory resource represented by a memory 932 for storing instructions executable by the processing component 922, such as application programs. The application programs stored in the memory 932 may include one or more modules, each corresponding to a set of instructions. In addition, the processing component 922 is configured to execute the instructions to execute the cell reselection method or the information transmission method provided by any of the foregoing embodiments of the above method, for example, the method shown in FIG. 2 and FIG. 3.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™} or the like.

Other embodiments of the present application will readily occur to those skilled in the art upon consideration of the specification and practice of the invention disclosed herein. This application is intended to cover any variations, uses, or adaptations of the present application that follow the general principles of the present application and include common knowledge or conventional techniques in the art not disclosed by this disclosure. The specification and examples are to be regarded as exemplary only, with the true scope and spirit of the application being indicated by the following claims.

It is to be understood that the present application is not limited to the precise structures described above and illustrated in the accompanying drawings and that various modifications and changes may be made without departing from the scope thereof. The scope of the application is limited only by the appended claims.

## Claims

1. A method for processing uplink transmission, applied to a communication device, comprising:
determining a target time point in response to an uplink transmission of a first priority and an uplink transmission of a second priority overlapping in a time domain, wherein the first priority is higher than the second priority;
canceling the uplink transmission of the second priority after the target time point, wherein the target time point is determined at least in part according to an available time domain position of the uplink transmission of the first priority.

2. The method of claim 1, wherein,
the target time point is determined by comparing an end time point of the L1^{th} symbol after an end position of time domain resource of a physical downlink control channel where physical downlink control information for scheduling the uplink transmission of the first priority is located and a start time point of L2 symbols before a start position of time domain resource of the uplink transmission of the first priority;
or,
the target time point is determined according to a start time point of L2 symbols before a start position of resource of the uplink transmission of the first priority;
wherein, L1 is 0 or a positive integer; L2 is 0 or a positive integer.

3. The method of claim 1, wherein,
the target time point is determined by comparing an end time point of the L1^{th} symbol after an end position of time domain resource of a physical downlink control channel where physical downlink control information for scheduling the uplink transmission of the first priority is located and an end time point of the L3^{th} symbol after an end position of time domain resource of a physical downlink shared channel of the first priority scheduled by the physical downlink control information;
or,
the target time point is determined according to an end time point of the L3^{th} symbol after an end position of time domain resource of a physical downlink shared channel of the first priority scheduled by physical downlink control information;
wherein, L1 is 0 or a positive integer; L3 is 0 or a positive integer.

4. The method of claim 1, wherein,
the target time point is determined by comparing an end time point of the L1^{th} symbol after an end position of time domain resource of a physical downlink control channel where physical downlink control information for scheduling the uplink transmission of the first priority is located and an end time point of the L4^{th} symbol after an end position of time domain resource of a physical downlink control channel where the physical downlink control information is located;
or,
the target time point is determined according to an end time point of the L4^{th} symbol after an end position of time domain resource of a physical downlink control channel where physical downlink control information for scheduling the uplink transmission of the first priority is located;
wherein, L1 is 0 or a positive integer; L4 is 0 or a positive integer.

5. The method of any of claims 2 to 4, wherein the target time point is determined according to an earlier one in the comparing.

6. The method of any one of claims 2 to 4, wherein,
L1 is a sum of T_{proc,2} and d1;
T_{proc,2} is the shortest interval between an end time point of resource position of the physical downlink control channel and a start time point of resource position of a physical uplink shared channel allowed in a communication protocol;
d1 is a positive integer less than or equal to N, or d1 is 0; wherein, N is a number of symbols included in one slot.

7. The method of claim 2, wherein,
L2 is a positive integer less than or equal to N, or L2 is 0; wherein, N is a number of symbols included in one slot.

8. The method of claim 7, wherein the communication device is a terminal;
the method further comprises:
obtaining L2 sent by a base station, wherein L2 is determined by the base station based on a terminal capability reported by the terminal;
or,
L2 is specified by a communication protocol.

9. The method of claim 3, wherein,
L3 is a sum of T_{proc,1} and d2;
T_{proc,1} is the shortest interval between an end time point of resource position of the physical downlink shared channel and a start time point of resource position of a hybrid automatic repeat request acknowledgement allowed in a communication protocol;
d2 is a positive integer less than or equal to N, or d2 is 0; wherein, N is a number of symbols included in one slot.

10. The method of claim 9, wherein,
the uplink transmission of the first priority comprises uplink transmission of hybrid automatic repeat request acknowledgement information of the first priority.

11. The method of claim 4, wherein,
L4 is a sum of T_{proc,2} and d2;
T_{proc,2} is the shortest interval between an end time point of resource position of the physical downlink control channel and a start time point of resource position of a physical uplink shared channel allowed in a communication protocol;
d2 is a positive integer less than or equal to N, or d2 is 0; wherein, N is a number of symbols included in one slot.

12. The method of claim 11, wherein,
the uplink transmission of the first priority comprises uplink transmission of the physical uplink shared channel of the first priority.

13. The method of claim 1, wherein the communication device comprises a base station or a terminal.

14. An apparatus for processing uplink transmission, applied to a communication device, comprising:
a determining module, configured to determine a target time point in response to an uplink transmission of a first priority and an uplink transmission of a second priority overlapping in a time domain, wherein the first priority is higher than the second priority;
a cancelling module, configured to cancel the uplink transmission of the second priority after the target time point, wherein the target time point is determined at least in part according to an available time domain position of the uplink transmission of the first priority.

15. A communication device, comprising:
a processor;
a memory, configured to store instructions executable by the processor;
wherein the processor is configured to implement the method for processing uplink transmission of any of claims 1 to 13 when running the executable instructions.

16. A computer storage medium, wherein the computer storage medium is stored with a computer-executable program that, when executed by a processor, the method for processing uplink transmission of any of claims 1 to 13 is implemented.
